# EUROPÄISCHE PATENTSCHRIFT

(11) **EP 0 428 064 B1**
(45) Veröffentlichungstag und Bekanntmachung des Hinweises auf die Patenterteilung: **01.03.1995**
(21) Anmeldenummer: 90121360.3
(22) Anmeldetag: 08.11.1990
(51) Int. Cl.: F16C 11/06

(54) **Kunststoffgleitlager**
Sliding contact bearing consisting of plastics
Palier à contact lisse en matière plastique

(30) Priorität: 15.11.1989 DE 8913506 U
(43) Veröffentlichungstag der Anmeldung: 22.05.1991
(73) Patentinhaber: Fritz Himmermann GmbH & Co. KG, D-53940 Hellenthal (DE)
(72) Erfinder: Rosenthal, Dieter, W-5372 Schleiden-Oberhausen (DE); Fitz, Karl-Heinz, W-5372 Schleiden-Oberhausen (DE)
(74) Vertreter: Freischem, Werner, Dipl.-Ing.

(56) Entgegenhaltungen:
- EP-A- 0 168 663
- DE-A- 1 425 121
- DE-A- 2 062 475
- DE-A- 3 833 557

## Beschreibung

Die Erfindung bezieht sich auf ein Kunststoffgleitlager zur Aufnahme einer Kugel, das zwei in eine zylindrische Außenhülse eingesetzte Lagerringe mit kugelpfannenförmigen Lagerflächen aufweist und das in einen hohlzylindrischen Lagerträger einsetzbar und axial fixierbar ist, wobei jeder Lagerring im Querschnitt U-förmig ist und mit der Außenhülse eine Fettkammer bildet, von welcher Kanäle zur Lagerfläche des jeweiligen Lagerringes führen, und jeder Lagerring mit einer eigenen Außenhülse versehen ist und zwischen den Lagerringen und zwischen den Außenhülsen im montierten Zustand ein Spalt vorgesehen ist und mindestens ein Lagerring axial elastisch gegen den Lagerträger abgestützt ist.

Ein Kunststoffgleitlager dieser Art ist aus Fig. 1 der DE-A-38 33 557 bekannt. Das dort dargestellte Kunststoffgleitlager zur Aufnahme einer Kugel weist zwei in einen hohlzylindrischen Lagerträger einsetzbare, mit je einer Außenhülse versehene Lagerringe auf, zwischen denen die Kugel gelagert ist. Einer der beiden Lagerringe stützt sich mit seiner von der Kugel abgewandten Seite in axialer Richtung gegen einen Bund des Lagerträgers ab, während der andere Lagerring in der entgegengesetzten axialen Richtung unter Einfügen eines unter Vorspannung stehenden elastischen Zwischengliedes von einem in einer Nut des Lagerträgers angeordneten Seegerring gehalten ist. Zur Montage eines derartigen Lagers wird zunächst der erste Lagerring mit Außenhülse in den Lagerträger eingesetzt. Anschließend wird die zu lagernde Kugel und der zweite Lagerring mit Außenhülse eingesetzt. Danach wird das federnde Zwischenglied auf den zweiten Lagerring aufgedrückt und unter Vorspannung gebracht, bis der Seegerring in die vorgesehene Nut eingesetzt werden kann.

Aus der EP-A-168 663 sind Kunststoffgleitlager bekannt, bei denen die Fettkammern der beiden Lagerringe von einer gemeinsamen Außenhülse abgeschlossen und die Lagerringe in axialer Richtung aufeinanderliegen. Bei diesem Kunststoffgleitlager müssen die kugelpfannenförmigen Lagerflächen genau dem Durchmesser der zu lagernden Kugel entsprechen. Bei solchen Lagern besteht die Gefahr, daß die darin gelagerte Kugel im Lager klemmt oder aber ein zu großes Lagerspiel vorhanden ist.

Der Erfindung liegt die Aufgabe zugrunde, die Zahl der erforderlichen Teile des sich selbst schmierenden Kunststofflagers der eingangs beschriebenen Art zu verringern und den Einbau dieses Kunststofflagers zu erleichtern.

Diese Aufgabe wird erfindungsgemäß dadurch gelöst, daß die Außenhülse des zweiten Lagerringes sich axial über diesen Lagerring hinaus erstreckt und in einen im Durchmesser kleineren, konzentrischen Anschlagring übergeht und die Außenhülse mit in Ausnehmungen des Lagerträgers eingreifenden, radial federnden Rastnasen versehen ist.

Der zweite Lagerring wird über diesen Anschlagring in axialer Richtung federnd gegen den Lagerträger abgestützt.

Damit die im Querschnitt U-förmigen Lagerringe größere axiale Kräfte aufnehmen können, sind sie mit mindestens drei axial verlaufenden, in gleichen Abständen über den Umfang verteilten Verstärkungsrippen versehen.

Vorteilhafterweise ist der erste, in einen zylindrischen Lagerträger einschiebbare Lagerring mittels eines elastischen O-Ringes gegen einen Absatz des Lagerträgers abgestutzt. Der zweite Lagerring rastet bei Erreichen einer bestimmten Vorspannung der beiden Lagerringe und des elastischen O-Ringes mit seinen Rastnasen in Ausnehmungen des Lagerträgers ein. Der elastische O-Ring bewirkt einerseits, daß die beiden Lagerringe mit der erwünschten Kraft gegen die Kugeloberfläche gedrückt werden und andererseits, daß die zu lagernde Kugel zusammen mit den daran befestigten Teilen, z.B. ein Schalthebel, schwingungsgedämft gegenüber dem Lagerträger gelagert ist.

Weitere Merkmale der Erfindung ergeben sich aus den Ansprüchen 2 bis 6.

In der folgenden Beschreibung werden Ausführungsbeispiele der Erfindung unter Bezugnahme auf die Zeichungen näher erläutert. Diese zeigen in
- Fig. 1: eine Schnittansicht eines Kunststoffgleitlagers gemäß der Erfindung, in dem die Kugel eines Schalthebels gelagert ist,
- Fig. 2: eine Ansicht nach der Schnittlinie II-II in Fig. 1,
- Fig. 3: eine Schnittansicht eines Kunststoffgleitlagers gemäß der Erfindung als Montageeinheit,
- Fig. 4: eine Seitenansicht einer äußeren Außenhülse,
- Fig. 5: eine Ansicht von unten der Außenhülse gemäß Fig. 4.

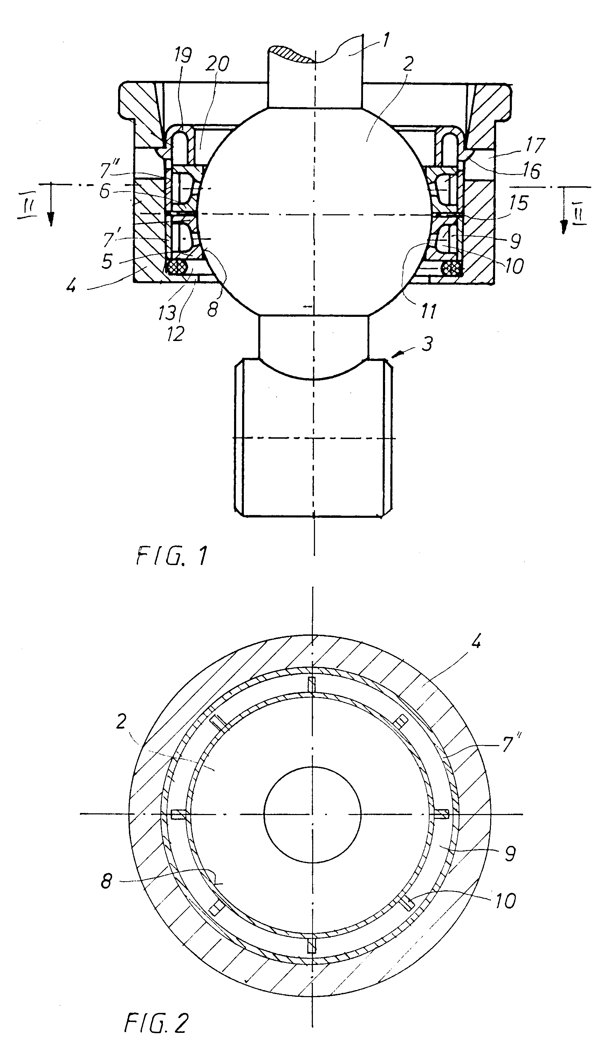

Die Fig. 1 zeigt den unteren Teil eines Schalthebels 1 , dessen Kugel 2 in einem Kunststoffgleitlager gemäß der Erfindung gelagert ist. Das Kunststoffgleitlager ist in einen Lagerträger 4 eingesetzt.

Das Gleitlager besteht aus zwei Lagerringen 5 und 6, die kugelpfannenförmige Lagerflächen 8 aufweisen. Die Lagerringe 5 und 6 sind im Querschnitt U-förmig und enthalten eine Fettkammer 9, die außen durch aus Kunststoff bestehenden Außenhülsen 7' und 7'' abgeschlossen sind. Die Fettkammern 9 stehen über Kanälen 11 mit den kugelpfannenförmigen Lagerflächen 8 in Verbindung, so daß Schmierstoff aus den Fettkammern zu den Lagerflächen 8 gelangen kann.

Der erste, in den Lagerträger 4 einzusetzende Lagerring 5 ist zusammen mit seiner Außenhülse 7' über einen O-Ring 13 aus Gummi elastisch gegen einen Absatz 12 des Lagerträgers 4 abgestützt. Nach Einsetzen der Kugel 2 in den Lagerring 5 kann ein zweiter Lagerring 6 mit seiner Außenhülse 7'' in den hohlzylindrischen Lagerträger 4 eingeschoben werden. Nach Erreichen einer gewünschten Vorspannung wird der zweite Lagerring 6 mit seiner Außenhülse 7'' axial gegenüber dem Lagerträger 4 fixiert. Diese Fixierung kann beispielsweise über einen Seegerring erfolgen, der in eine Nut des Lagerträgers eingesetzt wird. Bei dem Ausführungsbeispiel nach Fig. 1 ist die Außenhülse 7'' mit radial federnden Rastnasen 16 versehen, die in Ausnehmungen 17 des Lagerträgers 4 eingreifen. Zweckmäßigerweise sind über den Umfang in gleichen Abständen verteilt mindestens drei Rastnasen vorgesehen, die in eine Nut oder in Ausnehmungen 17 des Lagerträgers 4 eingreifen. Der Lagerträger 4 mit dem Absatz 12 und den Ausnehmungen 17 ist so dimensioniert, daß bei der axialen Fixierung des Kunststoffgleitlagers die erwünschte axiale Vorspannung eintritt. Damit die im Querschnitt U-förmigen Lagerringe 5 und 6 axiale Kräfte übertragen können, sind sie mit axial verlaufenden Versteifungswänden 10 versehen.

Wie die Fig. 2 zeigt, können über den Umfang in gleichen Abständen verteilt beispielsweise sechs, acht oder zehn Versteifungsrippen angeordnet sein. Diese Versteifungsrippen verhindern eine Verformung der kugelpfannenförmigen Lagerflächen unter axialem Druck.

Jeder Lagerring 5 und 6 bildet mit seiner zugehörigen Außenhülse 7' bzw. 7'' eine geschlossene Fettkammer 9. Die Außenhülsen 7' und 7'' können stramm auf die Lagerringe 5 und 6 aufgezogen sein. Es können auch in den Außenhülsen 7' ,7'' 0,3 oder 0,4 mm tiefe Nuten eingeformt sein, in die sich die Enden der Schenkel der U-förmigen Lagerringe 5 und 6 einsetzen.

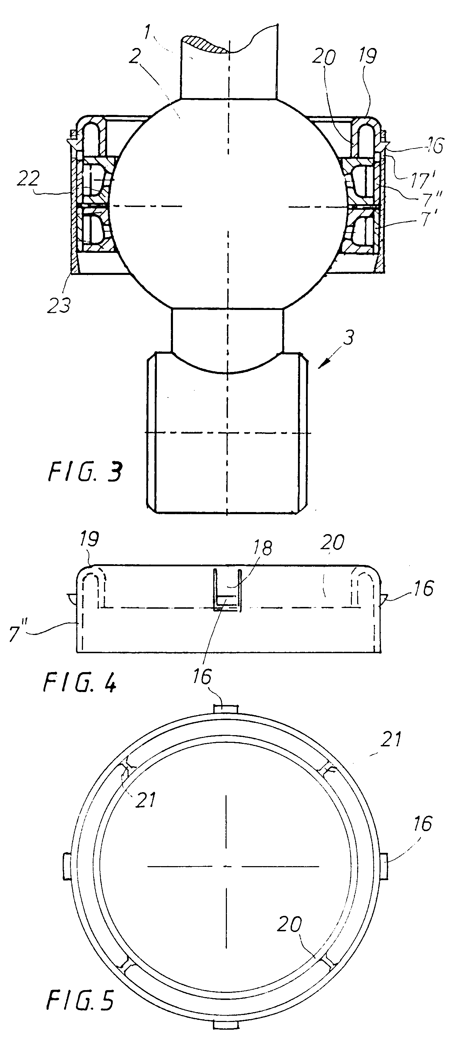

Die Außenhülse 7'' des zweiten bzw. des oberen Lagerringes 6 erstreckt sich axial über diesen Lagerring 6 hinaus und geht in einen im Durchmesser kleineren Anschlagring 20 über. Dieser Anschlagring 20 stützt den Lagerring 6 axial ab. Dieses Abstützen kann relativ elastisch erfolgen, sofern der Übergangsbereich 19 der aus Kunststoff bestehenden Außenhülse 7'' elastisch ist. Die insbesondere aus Fig. 4 und 5 ersichtliche Außenhülse 7'' kann aber auch so ausgebildet sein, daß die Abstützung relativ unelastisch ist und der Anschlagring 20 über axial verlaufende Versteifungswände 21 starr mit der Außenhülse 7'' verbunden ist. Je nach Anordnung und Zahl der Versteifungswände 21 kann die Starrheit bzw. die Elastizität des Anschlagringes 20 eingestellt werden.

Wie die Fig. 3 zeigt, kann der Schalthebel 1 mit Kugel 2 und dem Kunststoffgleitlager als fertige Montageeinheit in einer gemeinsamen Montagehülse 22 eingebracht werden. Die Montagehülse 22 kann aus Pappe oder einem billigen Kunststoff hergestellt sein und ist so ausgebildet, daß das Kunststoffgleitlager mit der darin gelagerten Kugel in einen Lagerträger eingeschoben werden kann. Die Montagehülse 22 hat Ausnehmungen 17' , in die die Rastnasen 16 einrasten können. Am gegenüberliegenden Rand ist eine Verdickung 23 vorgesehen, welche die Montageeinheit zusammenhält, die aber durch axialen Druck auf das Kunststoffgleitlager leicht zerstört werden kann.

### Bezugszeichenliste

- 1: Schalthebel
- 2: Kugel
- 3: kurzer Hebel
- 4: Lagerträger
- 5: erster Lagerring
- 6: zweiter Lagerring
- 7': Außenhülse des ersten Lagerringes 5
- 7'': Außenhülse des zweiten Lagerringes 6
- 8: Lagerfläche
- 9: Fettkammer
- 10: Verstärkungsrippe
- 11: Kanal
- 12: Anschlagbund , Absatz
- 13: O-Ring
- 15: Spalt
- 16: Rastnase
- 17: Aussparung
- 18: Zunge
- 19: Übergangsbereich
- 20: Anschlagring
- 21: Versteifungswände
- 22: Montagehülse
- 23: Verdickung

## Patentansprüche

1. Kunststoffgleitlager zur Aufnahme einer Kugel (2), das zwei in eine zylindrische Außenhülse eingesetzte Lagerringe (5,6) mit kugelpfannenförmigen Lagerflächen (8) aufweist und das in einen hohlzylindrischen Lagerträger (4) einsetzbar und axial fixierbar ist, wobei jeder Lagerring (5 und 6) im Querschnitt U-förmig ist und mit der Außenhülse eine Fettkammer (9) bildet, von welcher Kanäle (11) zur Lagerflache (8) des jeweiligen Lagerringes (5,6) führen, und jeder Lagerring (5,6) mit einer eigenen Außenhülse (7',7'') versehen ist und zwischen den Lagerringen (5,6) und zwischen den Außenhülsen (7' ,7'') im montierten Zustand ein Spalt (15) vorgesehen ist und mindestens ein Lagerring (5 oder 6) axial elastisch gegen den Lagerträger (4) abgestützt ist, dadurch gekennzeichnet, daß die Außenhülse (7'') des zweiten Lagerringes (6) sich axial über diesen Lagerring (6) hinaus erstreckt und in einen im Durchmesser kleineren, konzentrischen Anschlagring (20) übergeht und die Außenhülse (7'') mit in Ausnehmungen (17) des Lagerträgers (4) eingreifenden, radial federnden Rastnasen (16) versehen ist.

2. Kunststoffgleitlager nach Anspruch 1, dadurch gekennzeichnet, daß die Außenhülse (7'') über einen U-förmigen Übergangsbereich (19) in den im Durchmesser kleineren Anschlagring (20) übergeht und dieser Übergangsbereich (19) elastisch ausgebildet ist.

3. Kunststoffgleitlager nach Anspruch 1 oder 2, dadurch gekennzeichnet, daß der Anschlagring (20) mit der Außenhülse (7'') über axial vorlaufende, über den Umfang in gleichen Abständen verteilte Versteifungswände (21) starr verbunden ist.

4. Kunststoffgleitlager nach Anspruch 3, dadurch gekennzeichnet, daß die Versteifungswände (21) in bezug auf die Rastnasen (16) um gleiche Abstände versetzt sind.

5. Kunststoffgleitlager nach einem der Ansprüche 1 bis 4, dadurch gekennzeichnet, daß die zu lagernde Kugel (2) zusammen mit den beiden Lagerringen (5,6) und deren Außenhülsen (7' , 7'') und gegebenenfalls mit einem elastischen Ring (13) in eine gemeinsame, die Einheit zusammenhaltende Montagehülse (22) eingeschoben sind, aus der sie in einen Lagerträger (4) einschiebbar ist, wobei die Montagehülse (22) Ausnehmungen (17') zur Aufnahme der Rastnasen (16) aufweist.

6. Kunststoffgleitlager nach einem der Ansprüche 1 bis 5, dadurch gekennzeichnet, daß ein erster Lagerring (5) mittels eines elastischen O-Ringes (13) gegen einen Absatz (19) des Lagerträgers (4) abgestützt ist.

## Claims

1. A plastics plain bearing for accommodating a ball (2), which bearing has two bearing rings (5, 6) with ball socket-shaped bearing surfaces (8) and fitted into a cylindrical outer sleeve and can be fitted into and axially fixed in a hollow-cylindrical bearing carrier (4), wherein each bearing ring (5 and 6) is of U-shaped cross-section and with the outer sleeve forms a grease chamber (9) from which passages (11) lead to the bearing surface (8) of the respective bearing ring (5, 6), and each bearing ring (5, 6) is provided with its own outer sleeve (7, 7'') and in the assembled condition a gap (15) is provided between the bearing rings (5, 6) and between the outer sleeves (7', 7'') and at least one bearing ring (5 or 6) is axially elastically supported against the bearing carrier (4), characterised in that the outer sleeve (7'') of the second bearing ring (6) extends axially beyond said bearing ring (6) and goes into a concentric abutment ring (20) of smaller diameter and the outer sleeve (7'') is provided with radially resilient retaining projections (16) which engage into openings (17) in the bearing carrier (4).

2. A plastics plain bearing according to claim 1 characterised in that the outer sleeve (7'') goes into the smaller-diameter abutment ring (20) by way of a U-shaped transitional region (19) and said transitional region (19) is elastic.

3. A plastics plain bearing according to claim 1 or claim 2 characterised in that the abutment ring (20) is rigidly connected to the outer sleeve (7'') by way of axially extending stiffening walls (21) which are distributed at equal spacings around the periphery.

4. A plastics plain bearing according to claim 3 characterised in that the stiffening walls (21) are displaced through equal spacings with respect to the retaining projections (16).

5. A plastics plain bearing according to one of claims 1 to 4 characterised in that the ball (2) to be supported is inserted together with the two bearing rings (5, 6) and the outer sleeves (7', 7'') thereof and possibly with an elastic ring (13) into a common assembly sleeve (22) which holds the unit together and from which it can be pushed into a bearing carrier (4), the assembly sleeve (22) having openings (17') for accommmodating the retaining projections (16).

6. A plastics plain bearing according to one of claims 1 to 5 characterised in that a first bearing ring (5) is supported by means of an elastic O-ring (13) against a shoulder (12) of the bearing carrier (4).

## Revendications

1. Palier à contact lisse en matière plastique destiné à recevoir une rotule (2), présentant deux bagues de palier (5, 6) insérées dans une douille extérieure cylindrique, avec des portées (8) en forme de coussinet sphérique et susceptible d'être inséré et fixé axialement dans un support de palier cylindrique creux (4), chaque bague de palier (5 et 6) présentant une section en U et définissant avec la douille extérieure une boîte à graisse (9) reliée par des canaux (11) à la portée (8) de chaque bague de palier (5, 6), chaque bague de palier (5, 6) étant dotée de sa propre douille extérieure (7' ,7''), un interstice (15) étant prévu entre les bagues de palier (5, 6) et entre les douilles extérieures (7' , 7'') à l'état monté, et au moins une bague de palier (5 ou 6) reposant de manière élastique dans la direction axiale contre le support de palier (4), caractérisé en ce que la douille extérieure (7'') de la seconde bague de palier (6) s'étend au-delà de cette bague de palier (6) dans la direction axiale pour se transformer en une bague de butée (20) concentrique de plus faible diamètre et en ce que la douille extérieure (7'') est dotée de doigts d'encliquetage (16) à élasticité radiale s'engageant dans des évidements (17) ménagés dans le support de palier (4).

2. Palier à contact lisse en matière plastique selon la revendication 1, caractérisé en ce que la douille extérieure (7'') se transforme en une zone de transition (19) en forme de U puis en une bague de butée (20) de plus faible diamètre et en ce que cette zone de transition (19) est élastique.

3. Palier à contact lisse en matière plastique selon la revendication 1 ou 2, caractérisé en ce que la bague de butée (20) est reliée de manière rigide à la douille extérieure (7'') par des parois de renfort (21) axiales, réparties à intervalles réguliers sur la périphérie.

4. Palier à contact lisse en matière plastique selon la revendication 3, caractérisé en ce que les parois de renfort (21) sont espacées des mêmes distances que les doigts d'encliquetage (16).

5. Palier à contact lisse selon l'une des revendications 1 à 4, caractérisé en ce que la rotule (2) à loger est insérée avec les deux bagues de palier (5, 6) et leurs douilles extérieures (7' , 7'') ainsi que, le cas échéant, une rondelle élastique (13), dans une douille de montage (22) commune maintenant ensemble l'unité, ladite douille de montage permettant le transfert de ladite rotule dans un support de palier (4), la douille de montage (22) présentant des évidements (17') pour recevoir les doigts d'encliquetage (16).

6. Palier lisse à contact en matière plastique selon l'une des revendications 1 à 5, caractérisé en ce qu'une première bague de palier (5) repose par l'intermédiaire d'un joint torique élastique (13) contre un épaulement (19) du support de palier (4).
